# EUROPEAN PATENT APPLICATION

(11) **EP 0 903 067 A2**
(43) Date of publication of application: **24.03.1999**
(21) Application number: 98202957.1
(22) Date of filing: 03.09.1998
(51) Int. Cl.: A01B 73/02, A01D 78/10

(54) **A foldable implement for working crop lying on the soil**

(30) Priority: 10.09.1997 NL 1006989; 20.11.1997 NL 1007596
(71) Applicant: MAASLAND N.V., 3155 PD Maasland (NL)
(72) Inventor: van den Engel, Alfonsus Jacobus, 3123 CM Schiedam (NL)
(74) Representative: Corten, Maurice Jean F.M.

(57) **Abstract**

The invention relates to an implement provided with a number of crop working members (14, 29, 30) rotatable about respective upwardly orientated axes, which crop working members are arranged in one or more groups (28, 22) each consisting of at least two crop working members for forming, in the folded out operative position of the implement, at least one row of crop working members orientated transversely to the direction of travel, while at least one group is fitted to a frame (1) so as to be pivotable forwards or rearwards relative to the direction of travel, from the operative position into the folded up position, and pivoting means being provided, so that at least one of the crop working members of at least one group is pivotable, for the purpose of reducing, in the folded up position, the length of that group relative to the direction of travel, while, in the folded up position, at least one of the crop working members has pivoted through an angle of less than 180°, preferably less than 160°, for the purpose of reducing the length in the folded up position.

## Description

The invention relates to a foldable implement for working crop lying on the soil according to the preamble of claim 1. The invention relates in particular to a hay-making machine, more in particular to a rake or a tedder.

Such a machine is described in the non-published NL-A-1003292. The implement described in NL-A-1003292 is a tedder. This tedder comprises side groups which are pivotable forwards relative to the direction of travel from the folded out position into a folded up position, and a central group. The central group and the two side groups each comprise four crop working members constituted by driven rotating rakes. In the folded up position, the crop working member at each end of the central group has pivoted upwards through approximately 90°. Of the two side groups each time the two outer crop working members have pivoted upwards through approximately 180° into the folded up position, so that they are located, in the folded up position, approximately straight above the two crop working members of the respective side group that are located more inwards. In this manner this known implement has a very large working width and nevertheless a small transport width. Because of its very large size and very large weight this implement is equipped with a main frame that is permanently supported on the ground by running wheels, so that, also in the transport position, the implement moved forward by a tractor maintains its drive on the ground.

The invention aims at providing an other implement having a large working width for working crop lying on the soil, which implement can be brought, in a simple manner, into the transport position in which it has a considerably smaller width. For this purpose the implement comprises the combination of measures enumerated in claim 1.

The embodiment according to the invention ensures a shorter length of the implement in the transport position.

In an advantageous embodiment of the invention, a number of crop working members of a side group is folded up forwards or rearwards obliquely upwards into the transport position. This offers the possibility of a shorter implement in the transport position at a minimum number of moving parts.

In another advantageous embodiment of the invention, at least one crop working member pivots upwards into the transport position through an angle of less than 180°, preferably of less than 160°, relative to other crop working members of the same side group. Also in this manner there is achieved a shorter length of the implement in the folded up transport position at a minimum number of moving parts.

A further objective of the invention is to keep the centre of gravity at a low level in the folded up position and/or during folding up. This is particularly important for implements having own running wheels for transport behind the tractor, so that these implements do not have to be coupled with the three-point lifting hitch.

According to a further embodiment of the invention, the crop working member towards which the crop is moved is protected by a screen member for intercepting the crop.

The invention will be explained in further detail on the basis of a number of non-restricting exemplary embodiments, which are considered at present as the most advantageous embodiments, and with reference to the accompanying drawings.
Figure 1 is a plan view of a first embodiment of the implement according to the invention;
Figure 2 is a side view of the implement shown in Figure 1, in a first folded up position;
Figure 3 is a view corresponding to Figure 2, showing the implement in a second folded up position;
Figure 4 is a view corresponding to Figure 2, of a variant of the implement shown in Figure 1, again in a folded up position;
Figure 5 is a plan view of still another embodiment of the implement according to the invention;
Figure 6 is a side view of the implement shown in Figure 5, in a folded up position, and
Figure 7 is a view corresponding to Figure 6 of a variant of the implement shown in Figure 5;
Figure 8 is a plan view of the embodiment shown in Figure 1, provided with screens;
Figure 9 is to an enlarged scale a side view of a part of the screen, and
Figure 10 is a side view according to the arrow IX - IX in Figure 9.

In the drawings corresponding parts for the various embodiments shown and described here are indicated by the same reference numerals.

The implement according to the invention comprises a frame 50 consisting of a frame beam 51 extending in the direction of travel A of the implement, to which frame beam 51 a frame beam 52, extending transversely to the direction of travel A, is adjacent. The frame beam 52 comprises a gear box 4 with two side wings 80.

At the rear side of the implement there is a rear and central group 22 consisting of four working members 14 which, in practice, are also designated as crop working members or rotors if a so-called tedder or a rake respectively is concerned.

These working members are rotatable about upwardly orientated axes of rotation and are positioned in one line which is substantially perpendicular to the direction of travel A. For the purpose of carrying the working members 14, the central group 22 comprises a central frame beam 15 to which the two working members 14 situated in the middle are directly coupled, while the outer working members 14 of the central group 22 are fitted to the central frame beam 15 via respective frame parts 16 and 17 which are capable of pivoting upwards about respective shafts 18, 19 extending predominantly transversely to the longitudinal direction of the frame beam 15. This upward pivoting movement can take place with the aid of e.g. hydraulic or pneumatic cylinders which are mounted in a manner known per se to the man skilled in the art.

The outer groups of working members 28 each consist of four working members 29 and 30 which are subdivided into pairs of inner working members 29 and pairs of outer working members 30 and which, as to their function, correspond to the working members 14 of the central group 22. Like the working members of the central group 22, the working members 29, 30 of the two side groups 28 are substantially positioned in one line which is orientated substantially perpendicular to the direction of travel A.

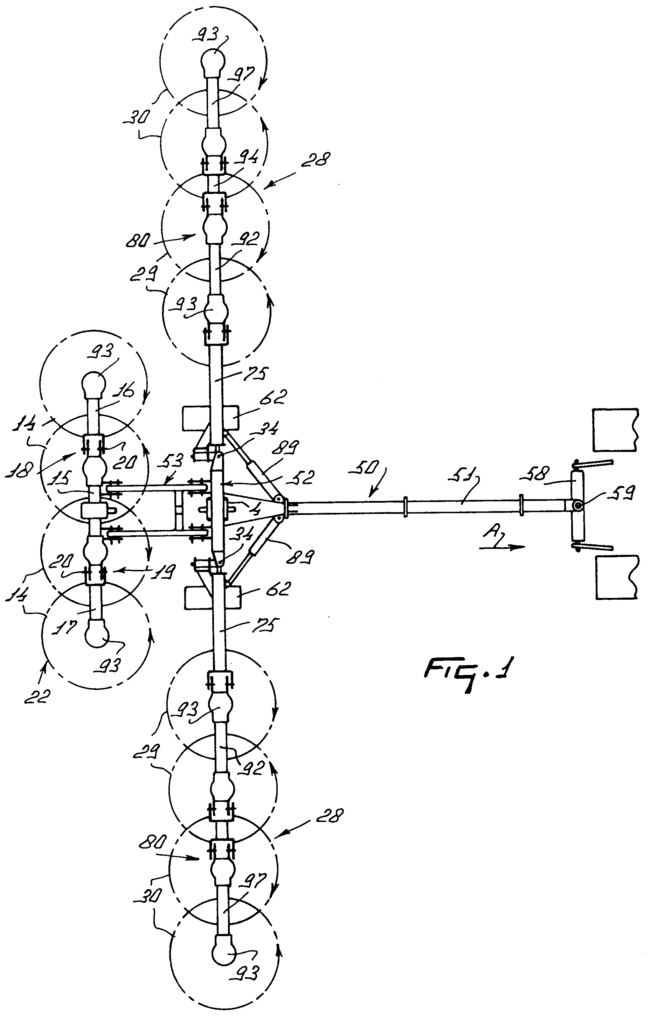

The groups of working members 28 are arranged in the operative position (Figure 1) in such a manner that each time the crop working member 29 of a side group 28, which is located most inwardly (i.e. closest to the frame beam 51) relative to the direction of travel A, has an overlapping relationship with the working member 14 located at the respective end of the central group 22. If the implement is used in an other manner for displacing crop lying on the soil, this mutual overlapping, which also applies to the crop working members 14, 29 and 30 respectively of a respective central group 22 or a side group 28, can be omitted.

To the frame beam 51 there are furthermore coupled running wheels 62, e.g. by the intermediary of a member that is capable of being lengthened or shortened, such as a (non visible) hydraulic or pneumatic cylinder, by means of which the level of the frame 50 is adjustable. The running wheels 62 can be fixed or be rotatable freely or in a controlled manner about upwardly orientated shafts, e.g. for the purpose of following a bend.

Under the respective crop working members 14, 29, 30 there are provided running wheels 39 that are self-adjusting. The drive for these crop working members 14, 29, 30 takes place in a known manner via drive shafts extending through the frame beams to which the relevant crop working members are fitted. These drive shafts are driven from the power take-off shaft of the tractor and via the gear box 4. Above each crop working member 14, 29, 30 there is preferably provided in a manner known per se a gear box with square transmission, by means of which the relevant crop working member 14, 29, 30 can be set in rotation, i.e. in such a manner that the crop working members directly adjacent to each other rotate in opposite directions. Preferably there is ensured that each time the outermost crop working member of a group, at the side facing the coupling trestle 58 of the tractor, rotates towards the middle of the relevant group, as indicated by the arrows in Figure 1. Alternatively, the crop working members 14, 29, 30 can also be driven by the ground. Other ways of being driven are applicable as well, e.g. in which each crop working member is driven by an individual electromotor.

Near the various hinge connections between the frame beams, the (non-shown) drive shafts are provided with so-called universal joints which enable to maintain the drive upon deflecting of the crop working members because of unevennesses of the ground. Another driving coupling of the mutually pivotable drive shafts is possible as well, e.g. while using wide-angle universal joints, so that also in the folded up transport position the drive shafts are engaging each other and the crop working members in a driven manner.

At the front side the frame beam 51 is fastened to a coupling trestle 58 so as to be freely hingeable about a vertical shaft 59, by means of which coupling trestle 58 the implement 1 can be coupled to a tractor which is only partially shown in the drawings.

In the advantageous embodiments shown and described here, there is provided a tilting mechanism 53 for tilting, in the folded out position of the central group 22 of working members and the outer groups 28 of working members, all the crop working members 14, 29, 30 simultaneously into the desired operative position To that end this mechanism 53 comprises a parallelogram of bars or beams included between the frame beam 52 and the central group 22, the position of said parallelogram being adjustable by means of the adjusting member 11, e.g. constituted by a hydraulic cylinder. By means of a further adjusting member 27, e.g. also constituted by a hydraulic cylinder, the shape of this parallelogram can be changed for the purpose of lifting the whole of the central group 22 into the transport position. For a complete description of the working of this mechanism 53 reference is made to the non-published Dutch patent application 1003292 in the name of Maasland N.V. A simultaneous adjustment into the tilted position of all crop working members 14, 29, 30 by means of the adjusting member 11 is ensured on the one hand by the parallelogram and on the other hand by the pivoting movement along with the parallelogram of the frame beam 52, in the produced part of which the frame beams belonging to the side groups 28 are located in the folded out operative position, in which position the latter frame beams are fixed to the frame beam 52.

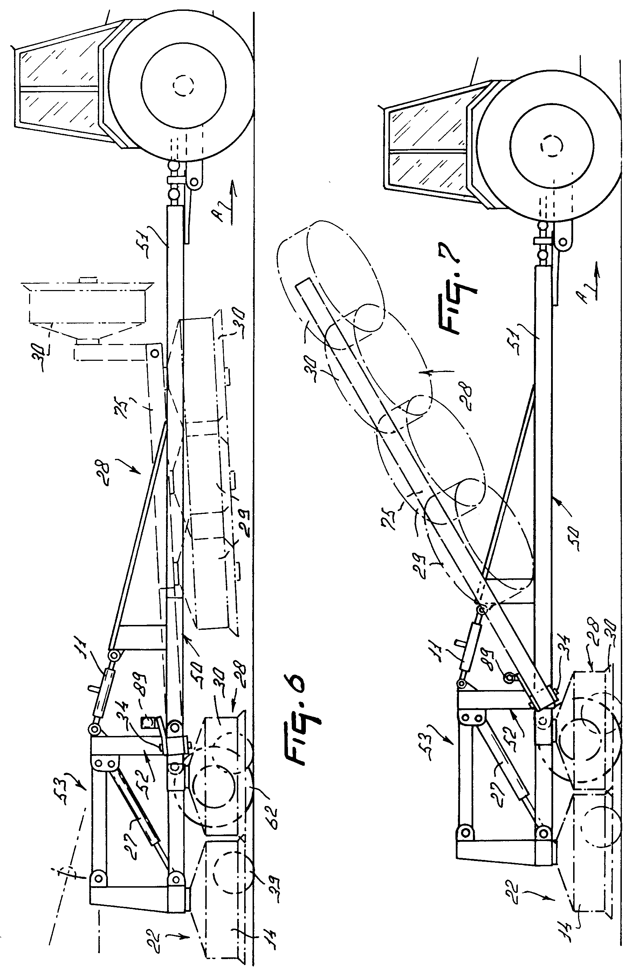

Each of the frame beams of the side wings 80 is engaged by an adjusting element 89, here constituted by a cylinder/piston combination. By energizing this adjusting element the respective frame beam of a side wing 80 can pivot about the upwardly orientated hinge pin 34. In the operative position indicated in Figures 1 and 5 by broken lines, the frame beams of the side wings 80 each time pivot about the respective hinge pin 34 in the direction of travel A into the transport position indicated by broken lines in Figure 5. In a non-shown manner the frame beam of a respective side wing 80 is pivotable, at its coupling to the frame beam 52, about an at least substantially horizontally orientated further shaft, e.g. by intermediary of further (non-shown) adjusting elements. The shaft 34 and the further shaft of the respective frame beam of a side wing 80 preferably intersect. Due to the possibility of pivoting about said further shaft which is predominantially horizontal it is possible, starting from the operative position, first to lift the frame beam of a respective side wing 80 to some extent in order to lift the running wheels 39 of each crop working member 29, 30 from the ground, whereafter the frame beam of a respective side wing 80 pivots forwards along with the adjusting element 89 about the shaft 34.

Now the folding up possibility of the frame beam of a respective side wing 80 for each of the embodiments shown in the drawing will be explained.

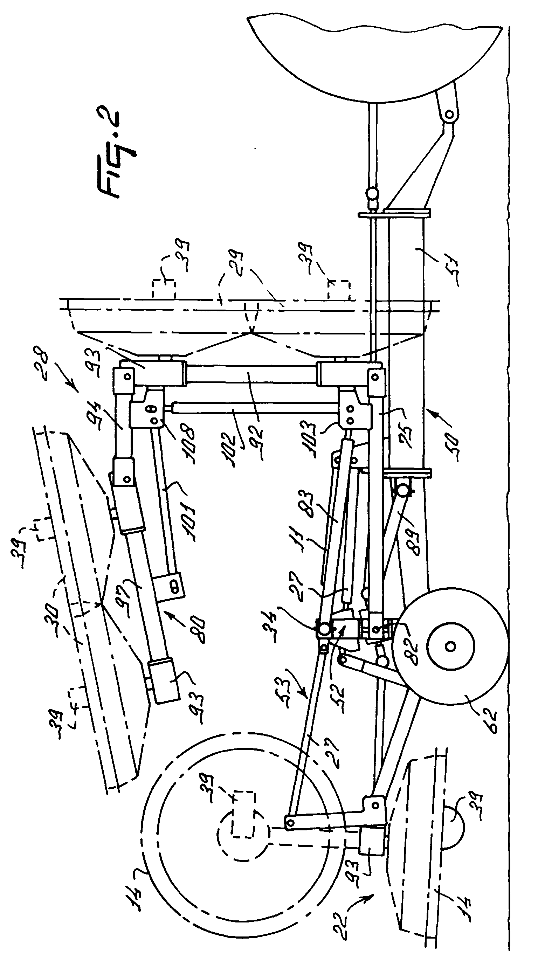

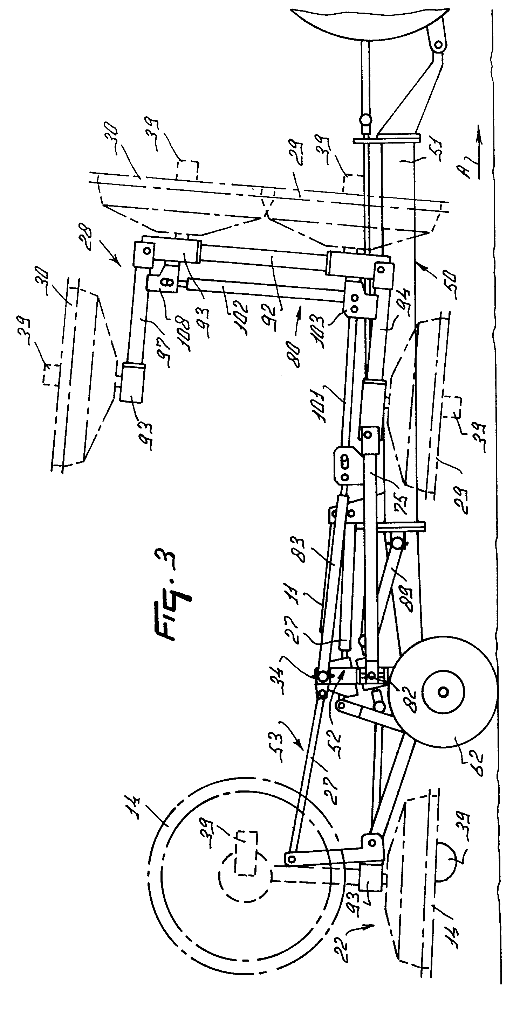

In the embodiments shown in Figures 1 to 6 each frame beam of a respective side wing 80 is designed as a jointed one, so that one part can pivot upwards relative to the other part into the folded up position. In the embodiment of Figures 1 and 2 the frame beam of a respective side wing 80 comprises an inner frame beam 75 to which is fastened an upwardly pivotable frame beam 92. The frame beam 92 carries two crop working members 29 and is also provided for that purpose with two spaced apart gear boxes 93. At the end faced away from the frame beam 75 there is fitted to the frame beam 92 an upwardly pivotable intermediate arm 94 which carries, at its end that is faced away from the frame beam 75, a frame beam 97 which is coupled so as to be pivotable upwardly. In an analogous manner as the frame beam 92, there are fitted to the frame beam 97 two crop working members 30 via gear boxes 93. An adjusting element 2, preferably a hydraulic cylinder/piston combination, engages the frame beam 75 and the intermediate arm 94 respectively. By means of this adjusting element 102 in cooperation with stops 103, 108 respectively, fitted to the frame beam 75 and the intermediate arm 94 respectively, it is possible to bring the frame beam 92 from a position located predominantly in the produced part of the frame beam 75 into the upwardly pivoted position shown in Figure 2 and to bring also the intermediate arm 94 from a position located predominantly in the produced part of the frame beam 92 into an upwardly pivoted position relative to the frame beam 92 shown in Figure 2. The frame beam 97 is pivotable upwards relative to the intermediate arm 94 through an angle of 20° at the most and, for that purpose, is preferably connected with the intermediate arm 94, besides via the pivotal mounting to the intermediate arm 94, via a steering rod 101 engaging a slotted hole.

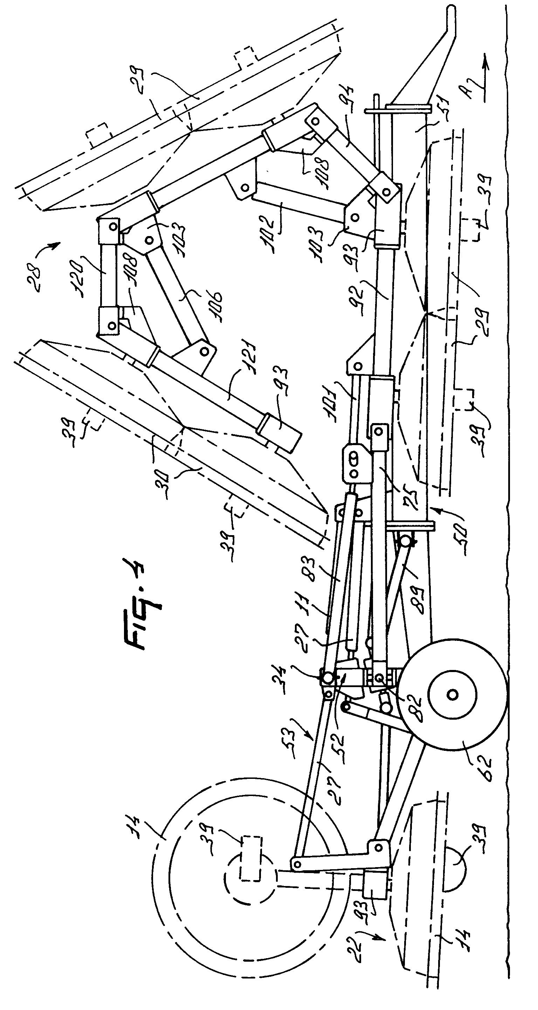

In the alternative shown in Figure 3 the intermediate arm 94 is located between the frame beam 75 and the frame beam 92, which intermediate arm 94 carries itself a crop working member 29 and the gear box 93 pertaining thereto. Now, in a similar manner as between the intermediate arm 94 and the frame beam 97 shown in Figure 2, there is only allowed a limited rotating movement between the frame beam 75 and the intermediate arm 94. In this situation the stops 103, 108 respectively are fitted to the intermediate arm 94 and the frame beam 97 respectively, the adjusting element 102 then being active between the intermediate arm 94 and the frame beam 97. As a variant of Figure 3 it is e.g. also possible to have the frame beam 97 carry more than one, e.g. two, crop working members 30. Whereas, according to Figure 2, the frame beam 92 carries two crop working members 30, said frame beam can carry as well one crop working member or more than two crop working members 30. Also the intermediate arm 94 can carry more than one crop working member 29. As a variant of Figure 2 it is e.g. possible to have the frame beam 97 carry only one crop working member 30 or more than two crop working members 30. Optionally it is also possible to have the frame beam 92 carry only one or more than two crop working members 29. It is possible as well, in any random combination, to have the intermediate arm 94 carry a crop working member in the embodiment of Figure 2.

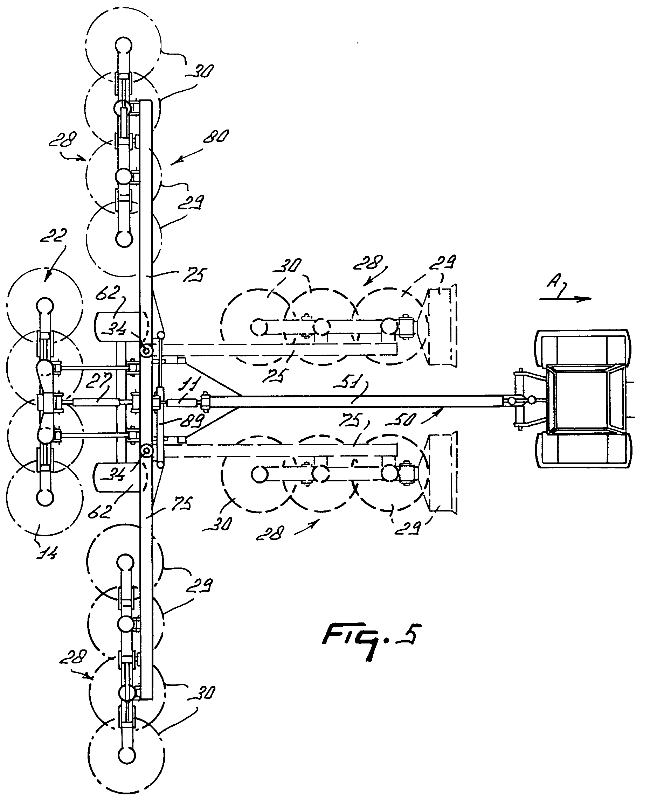

According to the variant of Figure 4, on the basis of the embodiment of Figure 1, at the end of the frame beam 97 that is faced away from the frame beam 75 there is coupled a further upwardly pivotable intermediate arm 120 at whose end faced away from the frame beam 75 there is coupled a further frame beam 121 so as to be pivotable upwards. As shown in Figure 3, due to the action of the steering rod 101, an upward pivoting movement between the frame beams 75 and 92 is only allowed through a limited angle. By means of the adjusting elements 102, 106 respectively (preferably hydraulic cylinder/piston combinations) provided between the frame beams 92, 97 and 97, 121 respectively, it is possible for said frame beams to pivot upwards through more than 90° relative to each other. Although the frame beams 92, 97 and 121 each carry two crop working members, any other random number and/or any other random type of crop working members are/is possible. It is possible as well to equip e.g. one or both intermediate arms 94, 120 with one or more crop working members. Furthermore it is possible to design the frame beams as upwardly pivotable ones in such a manner that in the folded up position there is created a variant relative to Figure 4, the frame beams 121, 97 being orientated predominantly parallel while being orientated substantially vertically, like e.g. in the position shown in Figure 4, e.g. in accordance with the position of the frame beam 92 in Figures 2 and 3.

By the expression 'pivoting upwards' is meant here that during folding up there is a pivoting movement in the direction in which the upper side of a crop working member 29, 30 is orientated.

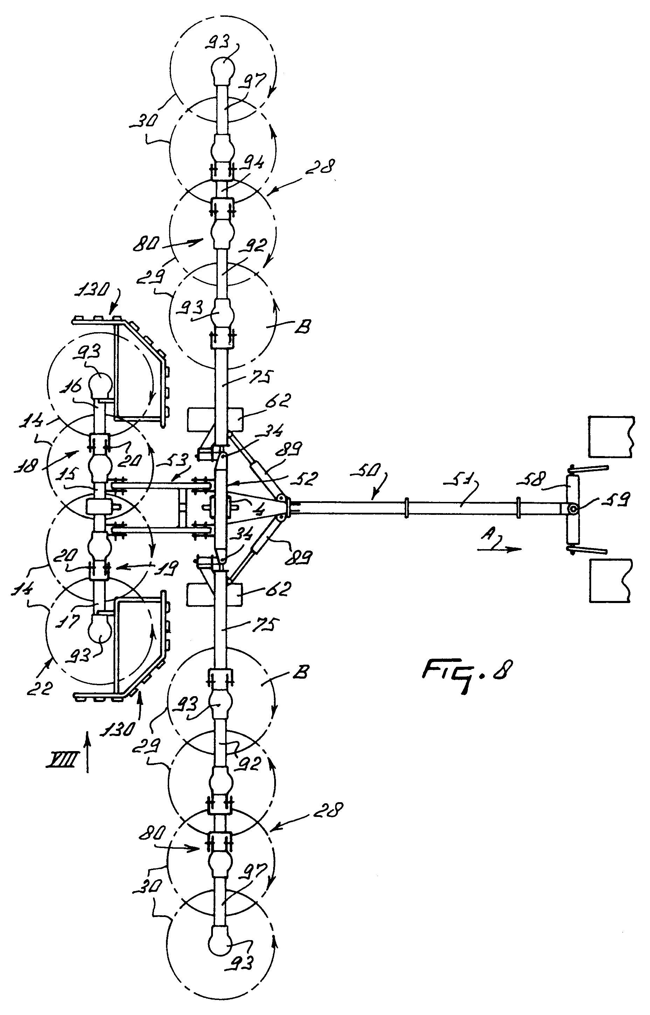

Figure 6 shows an alternative in which there are coupled three crop working members to the frame beam 75, while a frame beam 92, which is coupled to the outer end of the frame beam 75 so as to be able to pivot upwards, carries a fourth crop working member, said frame beam 92 having pivoted upwards into the transport position through an angle of approximately 90° relative to the frame beam 75. As shown in the plan view of Figure 5, the crop working members can be fitted to the frame beam 75 at the lateral side thereof, so that the frame beam 75 can be designed as a rigid body whilst offering the crop working members nevertheless an individual adjusting possibility or an adjusting possibility in pairs, e.g. for adapting themselves to unevennesses of the ground. In the embodiment shown in Figure 7 the crop working members remain predominantly in line with each other, but the preferably one-piece and substantially rigid frame beam 75 has pivoted both forwards and upwards into the folded up transport position. A single adjusting element, orientated substantially perpendicular to the direction of travel A, in this situation constituted by a hydraulic cylinder/piston combination, engages both frame beams 75 for the purpose of controlling the folding up process. Such an embodiment with a single adjusting element 89 for having the frame beams of the side wings 80 pivot forwards and rearwards is also applicable to the other embodiments described in the foregoing and further variants based thereon.

In the exemplary embodiments of Figures 2, 3 and 4 the adjusting element 83 (preferably a hydraulic cylinder/piston combination) is shown to pivot the frame beam of a respective side wing 80 entirely upwards through a relatively small angle of e.g. 20°, whilst engaging the frame beam 75, in order to lift the crop working members from the ground at the beginning of the process of folding up into the transport position.

Also in the embodiments shown in Figures 6 and 7 it is possible, like in the embodiments described here, to dispose per frame beam 75, 92 respectively more or less crop working members. Besides, in Figures 6 and 7 the crop working members 14 are shown exclusively in the operative position. It will be obvious that they can be folded up in the manner shown in Figure 3. In these Figures 6 and 7 the crop working members 30 are shown both in an operative position and in a folded up transport position (dashed/dotted lines).

The implement shown in Figures 8 to 10 is in accordance with the implement shown in Figure 1 and corresponding parts are indicated by the same reference numerals.

The crop working members 14 that are located at the outer sides of the group of crop working members are each provided with a screen member 130 protecting the crop working members at the front side and the lateral side against crop which is thrown by the crop working members, such as rake wheels, 29 in the direction of the crop working members 14.

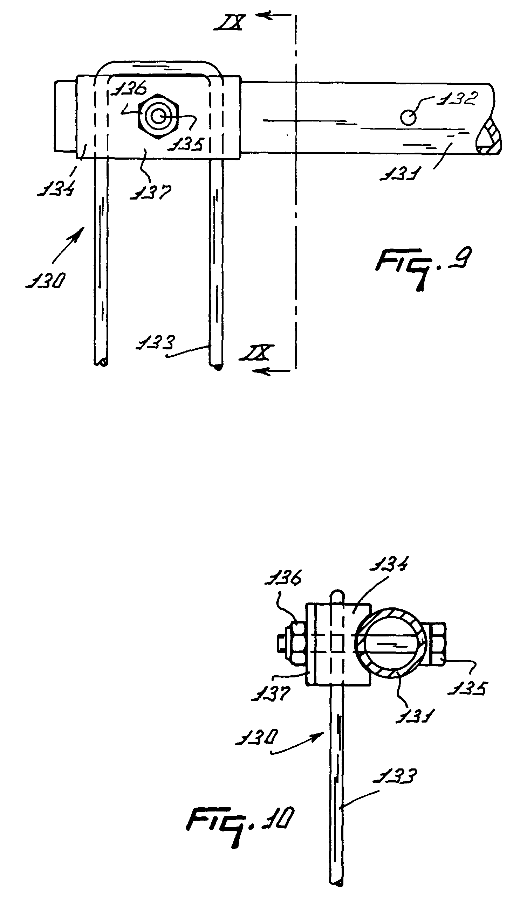

As shown in Figures 9 and 10, the screen member is constituted by a carrier 131 provided with apertures 132.

To said carrier there are fitted pairs of U-shaped bars 133. These bars are inserted through apertures into an elastic block 134. The elastic block 134 is clamped against the carrier 131 by means of a bolt and nut connection 135. The nut 136 rests against a protective plate 137, so that upon clamping the elastic block is not damaged. The U-shaped bars extend through the elastic block 134 as far as near the connecting piece. In this embodiment the length of the bars amounts to approximately 60 cm. The bars extend as far as approximately 20 - 30 cm from the ground. The carriers 131 are fastened to the frame parts 17.

The working of the implement is as follows. The crop working member 29B located on the right side of the implement, which crop working member, in plan view, rotates clockwise, and the crop working member 29B located on the left side of the implement, which crop working member rotates anticlockwise, displace a great deal of crop.

It has appeared that this crop is thrown against the outermost crop working member 14 on the right side or the outermost crop working member 14 on the left side. The protecting members 130 ensure a sufficient protection, so that the crop thrown too far is not taken along by the tines of the crop working members 14.

The elastic block 134 can be made of rubber or an elastic synthetic material.

The screens 130 can pivot along with the upward pivoting movement of the relevant crop working members 14, so as to form, in the transport position, a protection against undesirable contact with the crop working members.

## Claims

1. An implement which is capable of being folded up from an operative position into a transport position for working crop lying on the soil, which implement is provided with a number of crop working members (14, 29, 30) rotatable about respective upwardly orientated axes, which crop working members are arranged in one or more groups (28, 22) each consisting of at least two crop working members for forming, in the folded out operative position of the implement, at least one row of crop working members orientated transversely to the direction of travel, said crop working members being disposed on a common frame (1) which can be coupled to a tractor and which frame (1) is equipped with running wheels (62) for being movable over the ground at least in the transport position, while at least one group is fitted to the frame (1) so as to be pivotable, from the operative position into the folded up position forwards or rearwards relative to the direction of travel, so that the width of the implement in the folded up position is smaller than in the operative position, and pivoting means being provided, so that at least one of the crop working members of at least one group is pivotable, for the purpose of reducing, in the folded up position, the length of that group relative to the direction of travel, characterized in that, in the folded up position, at least one of the crop working members has pivoted through an angle of less than 180°, preferably less than 160°, for the purpose of reducing the length in the folded up position.

2. An implement as claimed in claim 1, characterized in that pivotable crop working members have pivoted upwards or downwards from the operative position into the folded up position.

3. An implement as claimed in claim 1 or 2, characterized in that all crop working members of the group are pivotable about a common pivot shaft into the folded up position.

4. An implement as claimed in any one of the preceding claims, characterized in that the lower side of the pivotable crop working member (29, 30) is located, in the folded up position, at least partially above the frame portion (2) extending rearwardly from the end that is capable of being coupled to a tractor.

5. An implement as claimed in any one of the preceding claims, characterized in that the group (28) is capable of pivoting obliquely upwards, forwards or rearwards from the operative position into a folded up position.

6. An implement as claimed in claim 5, characterized in that the group (28) is pivotable forwards or rearwards about an axis of rotation inclining relative to the vertical.

7. An implement as claimed in claim 5 or 6, characterized in that in the folded up position, in which it has pivoted forwards or rearwards, said group (28) makes an angle of at least approximately 25° relative to the horizontal.

8. An implement as claimed in any one of the preceding claims, characterized in that a group (28) comprises at least one crop working member (29, 30) which, in the transport position, is folded up into a preferably at least substantially vertical position.

9. An implement as claimed in any one of the preceding claims, characterized in that a group (28) comprises at least two crop working members (29, 30) which, in the transport position, are folded up into a preferably at least substantially vertical position.

10. An implement as claimed in any one of the preceding claims, characterized in that a crop working member (30) located further outwardly is fastened to said group (28) so as to be pivotable in such a manner that, in the folded up position of the implement, this crop working member (30) is located above a more inwardly located crop working member of that group.

11. An implement as claimed in any one of the preceding claims, characterized in that one or more further outwardly located crop working members (30) of a group (28) can be folded up in such a manner that their lower sides are facing the direction opposite to the direction in which that group (28) is pivotable forwards or rearwards from the operative position into the folded up position.

12. An implement as claimed in claim 11, characterized in that, in the folded up position, at least two crop working members (29, 30) of a group (28), seen in side view of the implement, substantially constitute the two sides of a triangle whose top is orientated upwards.

13. An implement as claimed in any one of the preceding claims, characterized in that one or more further outwardly located crop working members (30) of the group (28) have pivoted further in the direction of more inwardly located crop working members (29) of that group (28).

14. An implement as claimed in claim 13, characterized in that the further outwardly located crop working members (30) have pivoted further than the inwardly located crop working members (29) by at least approximately 90°.

15. An implement as claimed in any one of the preceding claims, characterized in that one group comprises at least three crop working members (29, 30).

16. An implement as claimed in claim 15, characterized in that one group comprises at least four crop working members, at least three of which being pivotable about a common pivot shaft into the folded up position.

17. An implement as claimed in claim 15 or 16, characterized in that one group comprises at least five crop working members.

18. An implement as claimed in any one of the preceding claims, characterized in that, in the folded up position, the crop working members of a group, seen in side view, have at least substantially a U-shape.

19. An implement as claimed in any one of the preceding claims, characterized in that there are two groups which, relative to the direction perpendicular to the usual direction of travel, are interspaced and that there is a central group (22) bridging at least partially the space between these two groups.

20. An implement as claimed in claim 19, characterized in that of the central group (22) at least the two crop working members (14) located at the opposite ends thereof are pivotable downwardly or upwardly through an angle of preferably at least approximately 90° from the operative position into the folded up position.

21. An implement as claimed in claim 19 or 20, characterized in that, seen in the direction of travel, the groups (28) which have to pivot forwardly or rearwardly for being brought from the operative position into the transport position, are located in front of the central group (22).

22. An implement as claimed in any one of the preceding claims, characterized in that the crop working members of a group are capable of being driven by a rotatable connecting rod system.

23. An implement provided with a number of crop working members which are driven so as to be rotatable about respective upwardly orientated axes, which crop working members are arranged in the direction of travel A of the machine at some distance from each other and rotate in such a manner that a crop working member throws the crop in the direction of the other crop working member, in particular according to any one of the preceding claims, characterized in that the crop working member towards which the crop is thrown is protected by a screen member (130) for intercepting the crop.

24. An implement as claimed in claim 23, characterized in that the screen member consists of a carrier (131) to which a number of downwardly orientated bars (133) are fastened.

25. An implement as claimed in claim 23 or 24, characterized in that the bars are bent in a U-shape.

26. An implement as claimed in claim 25, characterized in that the bars bent in a U-shape are supported near their upper ends by a block made of elastic material, in particular are inserted into the block.

27. An implement as claimed in claim 26, characterized in that the block (134) of elastic material is clamped against the carrier by means of the bar bent in a U-shape.

28. An implement as claimed in claim 26 or 27, characterized in that the block is made of rubber.

29. An implement as claimed in any one of claims 23 to 28, characterized in that the block (134) is clamped against the carrier by means of a bolt and nut connection (135).

30. An implement as claimed in claim 29, characterized in that the bolt and nut connection at the side of the block that is faced away from the carrier pushes against a protective plate (137).

31. An implement as claimed in any one of claims 23 to 30, characterized in that the bars are made of spring steel.

32. An implement as claimed in any one of claims 23 to 31, characterized in that the bars are orientated at least substantially perpendicular to the ground.

33. An implement as claimed in any one of the preceding claims, characterized in that the machine comprises at least two groups of crop working members which, viewed transversely to the direction of travel, are arranged at some distance from each other, while, viewed in the direction of travel, the groups overlap each other at least partially.

34. An implement as claimed in claim 33, characterized in that the overlapping is limited to one crop working member.

35. An implement as claimed in any one of the preceding claims, characterized in that the adjacent crop working members of the two groups rotate in opposite directions.

36. An implement as claimed in claim 35, characterized in that, seen in the direction of travel, the foremost crop working member of the crop working members located in the vicinity of each other, cooperates with an adjacent crop working member of the rear group of crop working members in such a manner that the crop is displaced rearwards by the two crop working members together.

37. An implement as described in the foregoing and shown in the drawings.
